(19) Europäisches Patentamt
European Patent Office
Office européen des brevets

(11) **EP 2 184 861 A1**

(12) **EUROPÄISCHE PATENTANMELDUNG**

(43) Veröffentlichungstag:
**12.05.2010 Patentblatt 2010/19**

(51) Int Cl.:
***H04B 1/10*** *(2006.01)*

(21) Anmeldenummer: **08019350.1**

(22) Anmeldetag: **05.11.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Trident Microsystems (Far East) Ltd.**
**Grand Cayman (KY)**

(72) Erfinder:
• **Schur, Romed**
**79183 Waldkirch (DE)**

• **Van Klinken, Arnoud Hendrik**
**6874BE Wolfheze (NL)**
• **Keller, Stefan**
**79114 Freiburg (DE)**

(74) Vertreter: **Epping - Hermann - Fischer**
**Patentanwaltsgesellschaft mbH**
**Ridlerstrasse 55**
**80339 München (DE)**

(54) **Verfahren und Schaltungsanordnung zur Detektion und Auslöschung eines schmalbandigen Störsignals in einem breitbandigen Nutzsignal**

(57) Verfahren und Schaltungsanordnung zur Detektion und Auslöschung eines schmalbandigen Störsignals in einem breitbandigen Nutzsignal mittels eines adaptiven Prädiktionsfilters, bei dem das von dem Prädiktionsfilter rekonstruierte Störsignal mit dem Nutzsignal zur Filterung überlagert wird und aus dem gefilterten Nutzsignal adaptierte Prädiktionsfilterkoeffizienten zur Rekonstruktion des Störsignals erzeugt werden, wobei erfindungsgemäß das rekonstruierte Störsignal auf den Prädiktoreingang des Prädiktionsfilters rückgekoppelt wird.

Fig. 3

**Beschreibung**

Die Erfindung betrifft ein Verfahren und eine Schaltungsanordnung zur Detektion und Auslöschung eines schmalbandigen Störsignals in einem breitbandigen Nutzsignal gemäß dem Oberbegriff des Patentanspruchs 1.

In Breitband-Kommunikationssystemen, wie bspw. in Telekommunikationssystemen können Nutzsignale mit Schmalbandstörungen behaftet sein, welche vorzugsweise ausgefiltert bzw. weitgehend unterdrückt werden sollten.

Bei einem bekannten Verfahren wird zunächst die Frequenz des Störsignals mit Hilfe der diskreten Fouriertransformation bestimmt. Zur Filterung solcher schmalbandigen Störungen wird diese Frequenzinformation im Allgemeinen in sogenannten "Notch-Filtern", die schmalbandige Bandsperren darstellen, verwendet, wodurch alle Spektralanteile, die der Störfrequenz entsprechen, also auch die aus dem eigentlichen Nutzsignal, herausgefiltert werden. Dies führt zu unerwünschten Beeinträchtigungen des eigentlichen Nutzsignals.

Ein anderes bekanntes Verfahren verwendet sogenannte adaptive Prädiktionsfilter zur Auslöschung eines schmalbandigen Störsignals, indem Amplitude, Frequenz und Phasenlage des Schmalbandstörers geschätzt werden.

Vor der Beschreibung dieses bekannten Verfahrens soll zunächst erläutert werden, unter welchen Voraussetzungen durch Auswertung der Korrelation eines Gesamtsignals, d. h. eines breitbandigen Nutzsignals und eines schmalbandigen Störsignals, das korrelierte schmalbandige Störsignal aus dem unkorrelierten breitbandigen Nutzsignal detektiert und amplituden-, phasen- und frequenzrichtig geschätzt und damit auch rekonstruiert werden kann.

Im Folgenden wird anstelle des Begriffs "Gesamtsignal", unter dem das mit dem schmalbandigen Störsignal behaftete Nutzsignal verstanden wird, der Begriff "ungefiltertes Nutzsignal" verwendet, während das mit dem noch zu erläuternden Verfahren gefilterte Gesamtsignal als "gefiltertes Nutzsignal" bezeichnet wird.

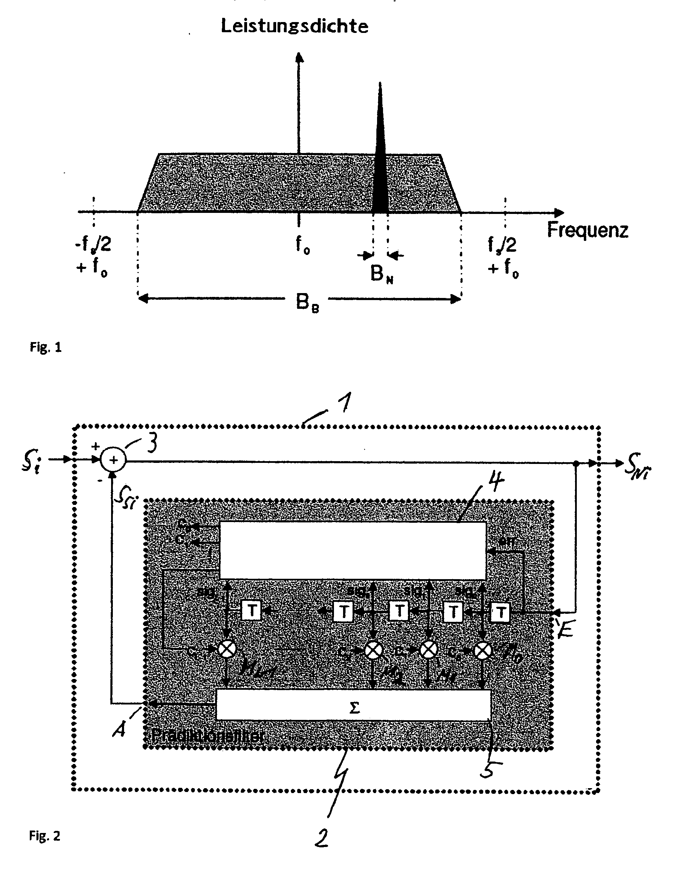

Wie in Figur 1 dargestellt ist, kann ein Störsignal, das einem mit der Abtastfrequenz $f_s$ digitalisierten Nutzsignal mit der Mittenfrequenz $f_0$ und der Bandbreite $B_B$ überlagert ist, dann als schmalbandig angesehen werden, wenn die Bandbreite $B_N$ des Störsignals die Bedingung $B_N \ll B_B$ erfüllt. Liegt die Bandbreite $B_B$ des digitalisierten Nutzsignals im Bereich der Abtastfrequenz $f_s$ und besitzt dieses Nutzsignal innerhalb dieser Bandbreite $B_B$ ein näherungsweise konstantes Leistungsdichtespektrum, so darf das Nutzsignal bezogen auf die Abtastfrequenz $f_s$ als unkorreliertes weißes Rauschen betrachtet werden, dem ein vergleichsweise schmalbandiges Störsignal, z. Bsp. ein Sinusstörer, überlagert ist.

Unter diesen Voraussetzungen kann die Detektion und Rekonstruktion des schmalbandigen Störsignals mit einem Prädiktionsfilter realisiert werden, dessen Prädiktionsfilterkoeffizienten $C_k$ (k=0, 1 ... L-1) in Abhängigkeit von der im Prädiktoreingang des Prädiktionsfilter enthaltenen Korrelation kontinuierlich adaptiert werden.

Die prinzipielle Struktur eines solchen Prädiktionsfilters sowie die verwendete Anordnung zur Unterdrückung eines der Figur 1 entsprechenden Störsignals zeigt Figur 2.

Die Schaltungsanordnung 1 nach Figur 2 zeigt ein Prädiktionsfilter 2 und einen Addierer 3, dem einerseits ein ungefiltertes Nutzsignal $S_i$ als Gesamtsignal (bestehend aus dem eigentlichen breitbandigen Nutzsignal und dem schmalbandigen Störsignal), und dem andererseits über einen Ausgang A des Prädiktionsfilters 2 ein rekonstruiertes Störsignal $S_{Si}$ zugeführt wird, so dass durch Subtraktion des im Prädiktionsfilter 2 rekonstruierten Störsignals $S_{Si}$ dessen Auslö-schung im breitbandigen Nutzsignal $S_i$ erreicht wird. Das in dieser Weise gefilterte Nutzsignal $S_{Ni}$ wird über einen Prädiktoreingang E des Prädiktionsfilters 2 sowohl zur Anpassung der Prädiktionsfilterkoeffizienten $C_0$, $C_1$, ... $C_{L-1}$ als Fehlersignal err direkt und über Verzögerungsglieder T als verzögerte Signale $sig_0$ bis $sig_{L-1}$ einer Koeffizienten-Anpassungsschaltung 4 zugeführt. Die verzögerten Signale $sig_0$ bis $sig_{L-1}$ werden zusätzlich jeweils einem Mischer $M_0$ bis $M_{L-1}$ zugeführt und dort mit jeweils einem von der Koeffizienten-Anpassungsschaltung 4 erzeugten Prädiktionsfilterko-effizienten $C_0$ bis $C_{L-1}$ gemischt. Die von den Mischern $M_0$ bis $M_{L-1}$ derart erzeugten Signale werden in einem Addierer 5 aufaddiert und bilden am Ausgang A des Prädiktionsfilters 2 das rekonstruierte Störsignal $S_{Si}$.

Mit abnehmender Leistung des Störsignals im Verhältnis zu der Leistung des vorhandenen Nutzsignals wird eine entsprechende Detektion und Rekonstruktion zunehmend schwieriger. Um auch bei schwachen Störsignalen eine nutzbare Korrelation im Gesamtsignal erkennen zu können, werden in der Regel Prädiktionsfilter mit entsprechend hoher Anzahl L von adaptiven Prädiktionsfilterkoeffizienten erforderlich. Eine derartige Lösung ist aufwendig und damit auch teuer.

Aufgabe der Erfindung ist es, ein verbessertes Verfahren zur Detektion und Auslöschung eines schmalbandigen Störsignals in einem breitbandigen Nutzsignal mittels eines adaptiven Prädiktionsfilters bereitzustellen, mit dem auch bei sehr schwachen Störsignalen eine ausreichende Empfindlichkeit zur Detektion und Rekonstruktion des Störsignals sichergestellt wird.

Ferner ist es Aufgabe der Erfindung eine Schaltungsanordnung zur Durchführung dieses erfindungsgemäßen Verfahrens bereitzustellen, die einfach und kostengünstig realisierbar ist.

Die erstgenannte Aufgabe wird gelöst durch ein Verfahren zur Detektion und Auslöschung eines schmalbandigen Störsignals in einem breitbandigen Nutzsignal mit den Merkmalen des Patentanspruchs 1.

Bei einem solchen Verfahren zur Unterdrückung eines dem Nutzsignal überlagerten Störsignals mittels eines adaptiven Prädiktionsfilters, bei dem das von dem Prädiktionsfilter rekonstruierte Störsignal dem ungefilterten Nutzsignal zur Filterung überlagert wird, vorzugsweise von diesem subtrahiert wird, und aus dem gefilterten Nutzsignal adaptierte Prädiktionsfilterkoeffizienten zur Rekonstruktion des Störsignals erzeugt werden, wird erfindungsgemäß das rekonstruierte Störsignal auf den Prädiktoreingang des Prädiktionsfilters rückgekoppelt.

Mit der erfindungsgemäßen Rückkopplung des Prädiktionsergebnisses auf den Prädiktoreingang kann das Störsignal mit wenigen, gegenüber dem Stand der Technik reduzierten Anzahl von Prädiktionsfilterkoeffizienten rekonstruiert werden, um anschließend aus dem ungefilterten Nutzsignal gefiltert zu werden, wobei das erfindungsgemäße Verfahren die Schätzung des Störsignals automatisch und kontinuierlich an die Dynamik des Störsignals, also hinsichtlich Änderungen der Amplitude, Frequenz und Phase, anpasst.

In einer besonders bevorzugten Weiterbildung der Erfindung wird zur Rekonstruktion des Störsignals ein einziger Filterkoeffizient erzeugt.

Mit dem erfindungsgemäßen Verfahren ist eine Reduzierung der Filterlänge des Prädiktionsfilters auf einen einzigen Prädiktionsfilterkoeffizienten möglich, ohne dabei auf ausreichende Empfindlichkeit zur Detektion und Rekonstruktion von sehr schwachen Störsignalen verzichten zu müssen. Vorzugsweise erfolgt dabei die Rückkopplung des rekonstruierten Störsignals auf den Prädiktoreingang des Prädiktionsfilters additiv.

In einer Weiterbildung der Erfindung lässt sich die Rückkopplung des Prädiktionsergebnisses auf den Prädiktoreingang des Prädiktionsfilters mit einem Verstärkungsfaktor $\alpha$ einstellen, der vorzugsweise nahe bei 1 liegt, d. h. $\alpha \approx 1$ mit $\alpha < 1$.

Vorzugsweise wird das Prädiktionsergebnis bei der Implementierung mit einem Verstärkungsfaktor 1, also direkt auf das Prädiktoreingangssignal aufaddiert, gleichzeitig jedoch die Subtraktion des rekonstruierten Störsignals von dem ungefilterten Nutzsignal mittels eines verstärkten Prädiktionsausgangssignals mit einem Verstärkungsfaktor $\beta$ mit $\beta \ll 1$, d.h. sehr klein mit $\beta > 0$, durchgeführt.

Ferner lassen sich in einer Weiterbildung der Erfindung die adaptierten Prädiktionsfilterkoeffizienten in Abhängigkeit der Korrelation des gefilterten Nutzsignals und des mit dem rückgekoppelten rekonstruierten Störsignals überlagerten gefilterten Nutzsignals unter Anwendung eines Adaptionsalgorithmus, vorzugsweise eines LMS(least-mean-square)-Algorithmus erzeugen, wobei prinzipiell auch andere Adaptionsmechanismen anwendbar sind.

Die zweitgenannte Aufgabe wird gelöst durch eine Schaltungsanordnung zur Detektion und Auslöschung eines schmalbandigen Störsignals in einem breitbandigen Nutzsignal mittels eines adaptiven Prädiktionsfilters mit den Merkmalen des Patentanspruchs 7.

Eine solche Schaltungsanordnung zur Detektion und Auslöschung eines schmalbandigen Störsignals in einem breitbandigen Nutzsignal mittels eines adaptiven Prädiktionsfilters, dessen Ausgang zur Überlagerung des ungefilterten Nutzsignals mit dem rekonstruierten Störsignal mit einem ersten Addierer und der Ausgang dieses ersten Addierers mit dem Prädiktoreingang des Prädiktionsfilters verbunden ist, ist erfindungsgemäß der Ausgang des Prädiktionsfilters zusätzlich mit dem Prädiktoreingang des Prädiktionsfilters verbunden.

Mit dieser erfindungsgemäßen Schaltungsanordnung lässt sich die gegenüber dem Stand der Technik erforderliche Anzahl der Prädiktionskoeffizienten zur Sicherstellung der gewünschten Empfindlichkeit der Detektion und der Rekonstruktion von schwachen Störsignalen maßgeblich reduzieren.

Idealerweise kann bei der erfindungsgemäßen Schaltungsanordnung ein Prädiktionsfilter 0-ter Ordnung eingesetzt werden, wobei eine Filterkoeffizienten-Anpassungsschaltung derart ausgebildet ist, dass in Abhängigkeit der Korrelation des gefilterten Nutzsignals und des mit dem rückgekoppelten rekonstruierten Störsignal überlagerten gefilterten Nutzsignals der einzige Filterkoeffizient des Prädiktionsfilters unter Anwendung eines Adaptionsalgorithmus erzeugt wird.

Durch diese erfindungsgemäße Reduzierung der Filterlänge auf einen einzigen Prädiktionsfilterkoeffizienten bleibt dennoch eine gute Empfindlichkeit zur Detektion und Rekonstruktion des Störsignals auch bei sehr schwachen Störsignalen, vorzugsweise Sinusstörer, erhalten.

In einer besonders bevorzugten Weiterbildung der Erfindung ist dem Prädiktionsfilter ein zweiter Addierer vorgeschaltet, wobei diesem zweiten Addierer über jeweils einen Eingang das rekonstruierte Störsignal als auch das gefilterte Nutzsignal zugeführt werden, vorzugsweise werden diese Signale über jeweils einen Verstärker diesem zweiten Addierer zugeführt.

In einer anderen bevorzugten Weiterbildung der Erfindung ist der Ausgang des Prädiktionsfilters einmal direkt mit dem zweiten Addierer verbunden und andererseits über einen Verstärker an den Eingang des ersten Addierers angeschlossen.

Wird das mit einem schmalbandigen Störsignal behaftete Breitbandnutzsignal durch ein Quadratur-Amplituden-Modeliertes(QAM)-Signal repräsentiert, wird zur verbesserten Unterdrückung des schmalbandigen Störsignals ein Entscheider eingebunden, indem dem ersten Addierer dieser Entscheider nachgeschaltet ist und dem Eingang des Prädiktionsfilters ein Schalter vorgeschaltet ist, mit dem entweder das Ausgangssignal des ersten Addierers oder das mit einem Addierer aus einem Ausgangssignal des Entscheiders und dem Ausgangssignal des ersten Addierers erzeugte Differenzsignal dem Eingang des Prädiktionsfilters zugeführt wird. Mit dieser Schaltung kann eine genauere Schätzung des schmalbandigen Störers erzielt werden, so dass damit die Störunterdrückung verbessert wird.

Schließlich ist in einer Weiterbildung der Erfindung die Filterkoeffizienten-Anpassungsschaltung derart ausgebildet, dass der einzige Filterkoeffizient des Prädiktionsfilters unter Anwendung des LMS(least-mean-square)-Algorithmus erzeugt wird. Prinzipiell kann aber auch ein beliebig anderer Adaptionsalgorithmus verwendet werden.

Die Erfindung wird nachfolgend anhand von Ausführungsbeispielen unter Bezugnahme auf die beigefügten Figuren ausführlich beschrieben. Es zeigen:

Figur 1    ein Frequenz-Leistungsdichte-Diagramm zur Darstellung eines schmalbandigen Störsignals in einem breitbandigen Nutzsignal,

Figur 2    eine Schaltungsanordnung nach dem Stand der Technik zur Detektion und Unterdrückung eines schmalbandigen Störsignals nach Figur 1 mittels eines Prädiktionsfilters,

Figur 3    eine erfindungsgemäße Schaltungsanordnung zur Detektion und Unterdrückung eines schmalbandigen Störsignals nach Figur 1 mittels eines Prädiktionsfilters,

Figur 4    eine weitere erfindungsgemäße Schaltungsanordnung zur Detektion und Unterdrückung eines schmalbandigen Störsignals nach Figur 1 mittels eines Prädiktionsfilters,

Figur 5    eine weitere erfindungsgemäße Schaltungsanordnung zur Detektion und Unterdrückung eines schmalbandigen Störsignals nach Figur 4, bei der das zu filternde Breitbandnutzsignal als Quadratur-Amplituden-Modeliertes (QAM)-Signal über einen Entscheider geführt wird, und

Figur 6    eine Schaltungsanordnung einer Koeffizienten-Anpassungsschaltung zur Erzeugung von Prädiktions-filterkoeffizienten nach dem LMS-Algorithmus.

Die Figuren 1 und 2 wurden bereits in der Einleitung im Zusammenhang mit der begrifflichen Erläuterung von schmalbandigen Störsignalen sowie deren Filterung mittels aus dem Stand der Technik bekannten adaptiven Prädiktionsfiltern beschrieben.

Auch in der folgenden Beschreibung der erfindungsgemäßen Ausführungsbeispiele wird der Begriff "ungefiltertes Nutzsignal" bzw. "gefiltertes Nutzsignal" in dem in der Beschreibungseinleitung gebrauchten Sinn verwendet, wonach das ungefilterte Nutzsignal das der Filterschaltung zugeführte zu filternde Gesamtsignal darstellt (bestehend aus dem breitbandige Nutzsignal und dem schmalbandigen Störsignal), während das gefilterte Nutzsignal das gefilterte Gesamtsignal darstellt.

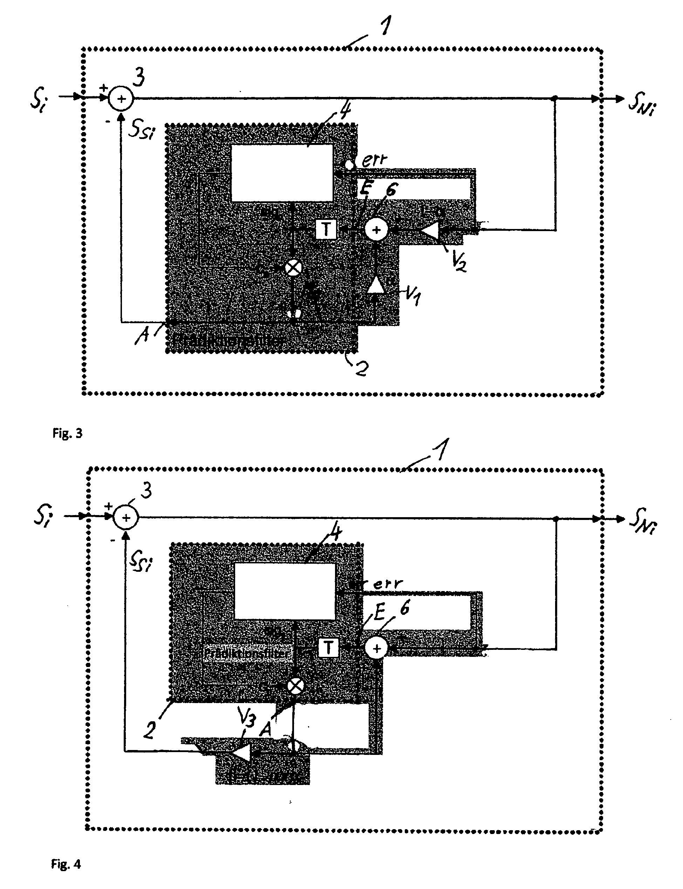

Die erfindungsgemäße Schaltungsanordnung 1 nach Figur 3 enthält gegenüber dem bekannten Prädiktionsfilter nach Figur 2 einen Prädiktionsfilter 2 von 0-ter Ordnung, d. h. mit lediglich einem einzigen komplexen Prädiktionskoeffizient $C_0$ wird das rekonstruierte Störsignal $S_{Si}$ erzeugt.

Dieses Prädiktionsfilter 2 umfasst somit neben einer aus Figur 2 bekannten Koeffizienten-Anpassungsschaltung 4 lediglich ein einziges Verzögerungsglied T und einen einzigen Mischer $M_0$. Das mit der Koeffizienten-Anpassungsschaltung 4 und dem Mischer $M_0$ verbundene Verzögerungsglied T bildet mit seinem Eingang den Prädiktoreingang E des Prädiktionsfilters 2 und führt ein gegenüber dem Prädiktoreingangssignal verzögertes Signal $sig_0$ sowohl der Koeffizienten-Anpassungsschaltung 4 als auch dem Mischer $M_0$ zu. Ein von der Koeffizienten-Anpassungsschaltung 4 erzeugter komplexer Prädiktionsfilterkoeffizient $C_0$ wird ebenfalls dem Mischer $M_0$ zugeführt und mit dem Signal $sig_0$ gemischt. Als Ergebnis dieses Mischungsvorganges liefert der Mischer $M_0$ an einen Ausgang A des Prädiktionsfilters 2 das rekonstruierte Störsignal $S_{Si}$, das mittels eines ersten Addierer 3 von dem ungefilterten Nutzsignal $S_i$ subtrahiert wird. Gleichzeitig wird das rekonstruierte Störsignal $S_{Si}$ auch über einen Verstärker $V_1$ mit einem Verstärkungsfaktor $\alpha$ einem zweiten Addierer 6 zugeführt, der dieses rekonstruierte Störsignal $S_{Si}$ und das von dem ersten Addierer 3 erzeugte gefilterte Nutzsignal $S_{Ni}$ nach ebenfalls einer Verstärkung mit dem Verstärkungsfaktor $1-\alpha$ mittels eines Verstärkers $V_2$ aufaddiert. Dieses derart erzeugte Summensignal steht dann am Prädiktoreingang E des Prädiktionsfilters 2 zur Verfügung. Das unverstärkte gefilterte Nutzsignal $S_{Ni}$ wird als Fehlersignal err direkt der Koeffizienten-Anpassungsschaltung 4 zugeführt. Über den Verstärkungsparameter $\alpha$ des Verstärker $V_1$ und den Verstärkungsparameter $1-\alpha$ des Verstärkers $V_2$ wird der Anteil des rückgekoppelten Prädiktorausgangssignals am gesamten Prädiktoreingangssignal eingestellt.

Durch die erfindungsgemäße Rückkopplung des Prädiktionsergebnisses auf den Prädiktoreingang E lässt sich die Filterlänge des Prädiktionsfilters 2 maßgeblich reduzieren, nämlich wie in Figur 3 gezeigt, auf einen einzigen adaptiven komplexen Prädiktionsfilterkoeffizienten $C_0$, ohne dabei Einbußen hinsichtlich der erforderlichen Empfindlichkeit zur Detektion und zur Rekonstruktion auch sehr schwacher Störsignale, vorzugsweise Sinusstörer, hinzunehmen.

Gemäß der Schaltungsanordnung 1 nach Figur 3 kann der rückgekoppelte Anteil $\alpha$ des Prädiktionsergebnisses sehr hoch sein, d. h. $\alpha \approx 1$ mit $\alpha < 1$. In diesem Fall bleibt durch die in Figur 4 dargestellte weitere Schaltungsanordnung lediglich ein einzelner Verstärkungsfaktor $\beta$ mit dem Wert $\beta = (1-a)/a$ mit $\beta \ll 1$, d.h. $\beta$ sehr klein mit $\beta > 0$, mittels eines Verstärkers $V_3$ zu berücksichtigen.

Diese alternative Anordnung bzgl. der Verstärker $V_1$ und $V_2$ nach Figur 4 unterscheidet sich von derjenigen nach Figur 3 einmal dadurch, dass der Ausgang A des Prädiktionsfilters 2 direkt mit dem zweiten Addierer 6 verbunden ist, der das rekonstruierte Störsignal $S_{Si}$ mit dem gefilterten Nutzsignal $S_{Ni}$ addiert und dieses Summensignal als Eingangssignal an den Prädiktoreingang E anlegt und zum anderen dadurch, dass der Ausgang A des Prädiktionsfilters 2 nicht direkt mit dem ersten Addierer 3 verbunden ist, sondern erst nach Verstärkung mittels des Verstärkers $V_3$ mit dem o. g. Verstärkungsfaktor β (β«1) von dem ungefilterten Nutzsignal $S_i$ subtrahiert wird, wobei ein solcher Wert β mit β«1 eine Dämpfung darstellt.

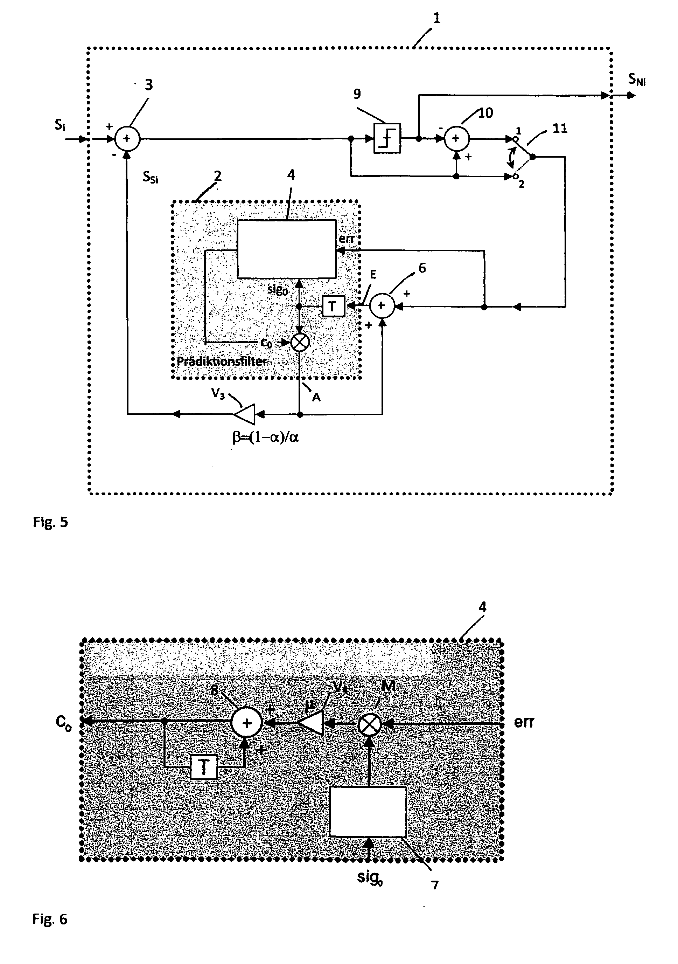

Das Ausführungsbeispiel nach Figur 5 unterscheidet sich von demjenigen nach Figur 4 lediglich dadurch, dass das breitbandige Nutzsignal $S_i$ durch ein Quadratur-Amplituden-Moduliertes(QAM)-Signal repräsentiert wird, dessen empfangene Symbole nach der Subtraktion des rekonstruierten Störsignals $S_{Si}$ von dem ungefilterten Nutzsignal $S_i$ mittels des ersten Addierers 3 einem Entscheider 9 zugeführt werden, an dessen Ausgang das gefilterte Nutzsignal $S_{Ni}$ zur Verfügung steht. Diesem Entscheider 9 ist ein Addierer 10 nachgeschaltet, der das gefilterte negative Nutzsignal $S_{Ni}$ und das dem Entscheider zugeführte Signal addiert und das Summensignal einem ersten Anschluss 1 eines Schalters 11 zuführt, wobei an einen zweiten Anschluss 2 dieses Schalters 11 auch das dem Entscheider 9 und dem Addierer 10 zugeführte Signal angelegt wird.

Das mit diesem Schalter 11 auswählbare Signal wird als Eingangssignal dem Prädiktionsfilter 2 sowohl direkt als Fehlersignal err als auch über den zweiten Addierer 6 zwecks Summation mit dem rückgekoppelten rekonstruierten Fehlersignal $S_{Si}$ zugeführt. Ist die Anzahl falscher Entscheidungen relativ hoch (wie es beispielsweise während der Akquisition der Fall ist), so werden die unentschiedenen Symbole als Prädiktoreingangssignal (entspricht der Schalter-Position 2) verwendet. Für den Fall hingegen, dass sehr wenige oder keine falschen Entscheidungen getroffen werden, dient die Differenz von unentschiedenen zu entschiedenen Symbole als Prädiktoreingangssignal (entspricht der Schalter-Position 1). Die Steuerung dieses Schalters 11 übernimmt im Allgemeinen ein Prozessor.

Im eingeschwungenen Zustand führt dies im Ergebnis zu einer genaueren Schätzung des schmalbandigen Störsignals und damit zu einer verbesserten Störunterdrückung.

Figur 6 zeigt beispielhaft die Realisierung einer Koeffizienten-Anpassungsschaltung 4, die in den Ausführungsbeispielen gemäß den Figuren 3, 4 und 5 einsetzbar ist. In dieser Koeffizienten-Anpassungsschaltung 4 ist ein LMS (least-mean-square)-Algorithmus als Adaptionsmechanismus implementiert, wobei auch andere Adaptionsmechanismen verwendet werden können.

In dieser Koeffizienten-Anpassungsschaltung 4 nach Figur 6 wird das als Fehlersignal err verwendete gefilterte Nutzsignal $S_{Ni}$ einem Mischer M zugeführt, der dieses Signal err mit einem von einer Schaltung 7 erzeugten komplexkonjugierten Signal $(sig_0)^*$ mischt, wobei das zeitverzögerte Signal $sig_0$ gemäß den Figuren 3, 4 und 5 aus dem von dem zweiten Addierer 6 erzeugten Summensignal mittels des Verzögerungsgliedes T erzeugt wird. Das mit diesem Mischer M berechnete Signal wird nach einer Verstärkung mit einer fest einstellbaren Verstärkung μ mittels eines Verstärkers $V_4$ dem bisherigen Prädiktionskoeffizienten $C_0$ nach einer Zeitverzögerung mittels eines weiteren Verzögerungsgliedes T unter Verwendung eines Addierers 8 zur Koeffizientenanpassung hinzuaddiert. Der neue Prädiktionskoeffizient $C_0[n+1]$ zum diskreten Zeitpunkt n+1 ergibt sich daher aus dem bisherigen Prädiktionskoeffizient $C_0[n]$ zum diskreten Zeitpunkt n durch:

$$C_0[n+1] = C_0[n] + \mu \cdot err \cdot (sig_0)^*.$$

Bezugszeichenliste

| | |
|---|---|
| 1 | Schaltungsanordnung |
| 2 | Prädiktionsfilter |
| 3 | erster Addierer |
| 4 | Koeffizienten-Anpassungsschaltung |
| 5 | Summierschaltung |
| 6 | zweiter Addierer |
| 7 | Schaltung zur Erzeugung von $(sig_0)^*$ |
| 8 | Addierer zur Koeffizientenanpassung |
| 9 | Entscheider |
| 10 | Addierer |
| 11 | Schalter |
| A | Ausgang des Prädiktionsfilters 2 |

| $B_B$ | Bandbreite eines Nutzsignals |
|---|---|
| $B_N$ | Bandbreite eines Störsignals |
| $C_0, C_1 ... C_{L-1}$ | Prädiktionsfilterkoeffizienten |
| E | Prädiktoreingang des Prädiktionsfilters 2 |
| err | Fehlersignal |
| $f_0$ | Mittenfrequenz |
| $f_s$ | Abtastfrequenz |
| $M_0 ... M_{L-1}$ | Mischer |
| $S_i$ | ungefiltertes Nutzsignal (= Nutzsignal + Störsignal ) |
| $S_{Ni}$ | gefiltertes Nutzsignal (= Nutzsignal + Störsignal - rekonstruiertes Störsignal)$S_{Si}$ rekonstruiertes Störsignal |
| $sig_i ... sig_{L-1}$ | zeitverzögerte Signale |
| T | Verzögerungsglieder |
| $V_1 ... V_4$ | Verstärker |

**Patentansprüche**

1. Verfahren zur Detektion und Auslöschung eines schmalbandigen Störsignals in einem breitbandigen Nutzsignal mittels eines adaptiven Prädiktionsfilters (2), bei dem das von dem Prädiktionsfilter (2) rekonstruierte Störsignal ($S_{Si}$) dem Nutzsignal ($S_i$) zur Filterung überlagert wird und aus dem gefilterten Nutzsignal($S_{Ni}$) adaptierte Prädiktionsfilterkoeffizienten ($C_0, C_1 ... C_{L-1}$) zur Rekonstruktion des Störsignals ($S_{Si}$) erzeugt werden,
**dadurch gekennzeichnet, dass**
das rekonstruierte Störsignal ($S_{Si}$) auf einen Prädiktoreingang (E) des Prädiktionsfilters (2) rückgekoppelt wird.

2. Verfahren nach Anspruch 1,
**dadurch gekennzeichnet, dass**
zur Rekonstruktion des Störsignals ($S_{Si}$) ein einziger Filterkoeffizient ($C_0$) erzeugt wird.

3. Verfahren nach Anspruch 1 oder 2,
**dadurch gekennzeichnet, dass**
die Rückkopplung des rekonstruierten Störsignals ($S_{Si}$) auf den Prädiktoreingang (E) additiv erfolgt.

4. Verfahren nach einem der Ansprüche 1 bis 3,
**dadurch gekennzeichnet, dass**
die Rückkopplung des rekonstruierten Störsignals ($S_{Si}$)
mit einem Verstärkungsfaktor $\alpha$ erfolgt, für den vorzugsweise $\alpha \approx 1$ mit $\alpha < 1$ gilt.

5. Verfahren nach einem der Ansprüche 1 bis 3,
**dadurch gekennzeichnet, dass**
das rekonstruierten Störsignals ($S_{Si}$) einerseits direkt auf den Prädiktoreingang E zurückgekoppelt wird und andererseits von dem ungefilterten Nutzsignal ($S_i$) nach einer Verstärkung mit einem Verstärkungsfaktor $\beta$ mit einem Wert $\beta \ll 1$ mit $\beta > 0$, subtrahiert wird.

6. Verfahren nach einem der vorangehenden Ansprüche,
**dadurch gekennzeichnet, dass**
die adaptierten Prädiktionsfilterkoeffizienten ($C_0, C_1, ... C_{L-1}$) in Abhängigkeit der Korrelation des gefilterten Nutzsignals ($S_{Ni}$) und des mit dem rückgekoppelten rekonstruierten Störsignals ($S_{Si}$) überlagerten gefilterten Nutzsignals ($S_{Ni}$) unter Anwendung eines Adaptionsalgorithmus, vorzugsweise mit einem LMS (least-mean-square)-Algorithmus erzeugt werden.

7. Schaltungsanordnung (1) zur Detektion und Auslöschung eines schmalbandigen Störsignals in einem breitbandigen Nutzsignal mittels eines adaptiven Prädiktionsfilters (2), dessen Ausgang (A) zur Überlagerung des Nutzsignals ($S_i$) mit dem rekonstruierten Störsignal ($S_{Si}$) mit einem ersten Addierer (3) verbunden ist und der Ausgang dieses ersten Addierers (3) mit dem Prädiktoreingang (E) des Prädiktionsfilters (2) verbunden ist,
**dadurch gekennzeichnet, dass**
der Ausgang (A) des Prädiktionsfilters (2) zusätzlich mit dem Prädiktoreingang (E) des Prädiktionsfilters (2) verbunden ist.

**8.** Schaltungsanordnung nach Anspruch 7,
**dadurch gekennzeichnet, dass**
ein Prädiktionsfilter (2) 0-ter Ordnung vorgesehen ist, wobei eine Filterkoeffizienten-Anpassungsschaltung (4) derart ausgebildet ist, dass in Abhängigkeit der Korrelation des gefilterten Nutzsignals ($S_{Ni}$) und des mit dem rückgekoppelten rekonstruierten Störsignal ($S_{Si}$) überlagerten gefilterten Nutzsignals ($S_{Ni}$) der einzige Filterkoeffizient ($C_0$) des Prädiktionsfilters (2) unter Anwendung eines Adaptionsalgorithmus erzeugt wird.

**9.** Schaltungsanordnung nach Anspruch 7 oder 8,
**dadurch gekennzeichnet, dass**
ein zweiter Addierer (6) dem Prädiktionsfilter (2) vorgeschaltet ist, wobei dem zweiten Addierer (6) über jeweils einen Eingang das rekonstruierte Störsignal ($S_{Si}$) als auch das gefilterte Nutzsignal ($S_{Ni}$) zugeführt werden.

**10.** Schaltungsanordnung nach Anspruch 9,
**dadurch gekennzeichnet, dass**
den Eingängen des zweiten Addierers (6) jeweils ein Verstärker ($V_1$, $V_2$) vorgeschaltet ist.

**11.** Schaltungsanordnung nach Anspruch 9,
**dadurch gekennzeichnet, dass**
der Ausgang (A) des Prädiktionsfilter (2) mit dem zweiten Addierer (6) direkt verbunden ist und dem Eingang des ersten Addierers (3) ein Verstärker ($V_3$) zur Zuführung des rekonstruierten Störsignals ($S_{Si}$) vorgeschaltet ist.

**12.** Schaltungsanordnung nach einem der Ansprüche 7 bis 11,
**dadurch gekennzeichnet, dass**
dem ersten Addierer (3) ein Entscheider (9) nachgeschaltet ist und dem Eingang (E) des Prädiktionsfilters (2) ein Schalter (11) vorgeschaltet ist, mit dem entweder das Ausgangssignal des ersten Addierers (3) oder das mit einem Addierer (10) aus einem Ausgangssignal des Entscheiders (9) und dem Ausgangssignal des ersten Addierers (3) erzeugte Differenzsignal dem Eingang (E) des Prädiktionsfilters (2) zugeführt wird.

**13.** Schaltungsanordnung nach einem der Ansprüche 8 bis 12,
**dadurch gekennzeichnet, dass**
die Filterkoeffizienten-Anpassungsschaltung (4) derart ausgebildet ist, dass der einzige Filterkoeffizient ($C_0$) des Prädiktionsfilters (2) unter Anwendung des LMS(least-mean-square)-Algorithmus erzeugt wird.

**Leistungsdichte**

Fig. 1

Fig. 2

Fig. 3

Fig. 4

Fig. 5

Fig. 6

Europäisches
Patentamt

European
Patent Office

Office européen
des brevets

# EUROPÄISCHER RECHERCHENBERICHT

Nummer der Anmeldung

EP 08 01 9350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WANG KUN-JIE ET AL: "Performance analysis of nonlinear interpolation filters in DS spread spectrum systems under narrowband interference condition" ELECTRONICS LETTERS, IEE STEVENAGE, GB, Bd. 34, Nr. 15, 23. Juli 1998 (1998-07-23), Seiten 1464-1465, XP006010055 ISSN: 0013-5194 * Seite 1464, linke Spalte, Zeile 14 - Zeile 25; Abbildung 1 * ----- | 1-3,6-9, 13 | INV. H04B1/10 |
| X | LASTER D ET AL: "INTERFERENCE REJECTION IN DIGITAL WIRELESS COMMUNICATIONS" IEEE SIGNAL PROCESSING MAGAZINE, IEEE SERVICE CENTER, PISCATAWAY, NJ, US, Bd. 14, Nr. 3, 1. Mai 1997 (1997-05-01), Seiten 37-62, XP011089773 ISSN: 1053-5888 * Seite 44, rechte Spalte, Zeile 47 - Seite 45, linke Spalte, Zeile 20; Abbildung 6 * ----- | 1-3,6-9, 13 | |
| A | US 2003/161418 A1 (STEELE GREG [US] ET AL) 28. August 2003 (2003-08-28) * Absätze [0022], [0030]; Abbildung 1 * ----- | 1,7 | RECHERCHIERTE SACHGEBIETE (IPC) H04B H04L |

Der vorliegende Recherchenbericht wurde für alle Patentansprüche erstellt

| Recherchenort | Abschlußdatum der Recherche | Prüfer |
|---|---|---|
| Berlin | 31. März 2009 | Masche, Christian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
    Dokument

EPO FORM 1503 03.82 (P04C03)

**EP 2 184 861 A1**

**ANHANG ZUM EUROPÄISCHEN RECHERCHENBERICHT
ÜBER DIE EUROPÄISCHE PATENTANMELDUNG NR.**

EP 08 01 9350

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2009

| Im Recherchenbericht angeführtes Patentdokument | Datum der Veröffentlichung | Mitglied(er) der Patentfamilie | Datum der Veröffentlichung |
|---|---|---|---|
| US 2003161418    A1 | 28-08-2003 | KEINE | |

EPO FORM P0461

Für nähere Einzelheiten zu diesem Anhang : siehe Amtsblatt des Europäischen Patentamts, Nr.12/82

12